# EUROPEAN PATENT SPECIFICATION

(11) **EP 0 240 295 B1**
(45) Date of publication and mention of the grant of the patent: **01.09.1993**
(21) Application number: 87302756.9
(22) Date of filing: 31.03.1987
(51) Int. Cl.: H02G 15/013, H02G 15/192, H02G 15/115

(54) **Joint closure**
Verbindungsverschluss
Fermeture de jonction

(30) Priority: 03.04.1986 GB 8608109
(43) Date of publication of application: 07.10.1987
(73) Proprietor: BOWTHORPE-HELLERMANN LIMITED, Crawley West Sussex RH10 2RZ (GB)
(72) Inventor: Foss, R., Peverell Plymouth Devon (GB)
(74) Representative: Gibson, Stewart Harry

(56) References cited:
- FR-A- 2 158 526
- GB-A- 1 379 466
- US-A- 2 635 900
- US-A- 2 761 707
- US-A- 2 769 648

## Description

This invention relates to a joint closure particularly for telecommunications cables, including optical fibre cables.

FR-A-2 158 526 discloses a joint closure comprising a cover and an end member. The cover and end member have respective outwardly-projecting peripheral flanges with a sealing ring disposed therebetween.

We have now devised a joint closure having advantageous features.

As seen from one aspect there is provided a joint closure comprising an end member a sleeve having an end portion which seats on a peripheral surface of the end member and against a radially projecting element of the end member with the interposition of a ring seal characterised in that the end portion of the sleeve is flexible and is inturned to seat on said peripheral surface of the end member and to seat by an outer face thereof against said radial element with the interposition of said ring seal.

Because the inturned end portion of the sleeve exhibits flexibly, this allows tolerances to be accommodated whilst maintaining the seal. Also, in the event that the joint closure is internally pressurised, this pressure acts on the flexible inturned end portion to further compress the ring seal and enhance the sealing effect.

The joint closure may comprise two sleeves seating at their opposite ends on a central member and respective end members, the two sleeves being slidable over their respective end members and away from the central member to re-open the joint. This arrangement permits easy re-entry of the joint, for repair or maintenance of the cables.

Embodiments of this invention will now be described by way of example only and with reference to the accompanying drawings, in which:
FIGURE 1 is a side view, partly in section, of a joint;
FIGURE 2 is a side view of the same joint showing its sleeve slid away to re-open the joint;
FIGURE 3 is a side view, partly in section of a single entry embodiment of joint;
FIGURE 4 is a side view, partly in section, of another single entry embodiment of joint and showing a sleeve with a modified form of inturned end, which is a modification also applicable to the joint sleeve of Figures 1 and 2; and
FIGURE 5 shows a unitary split ring end clamp for the joints.

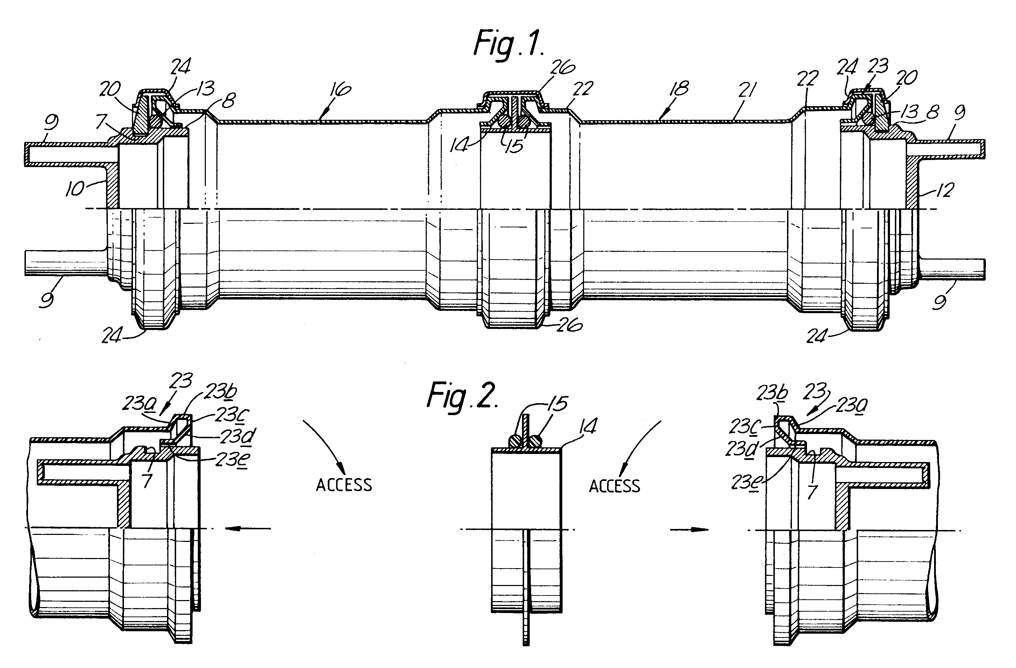

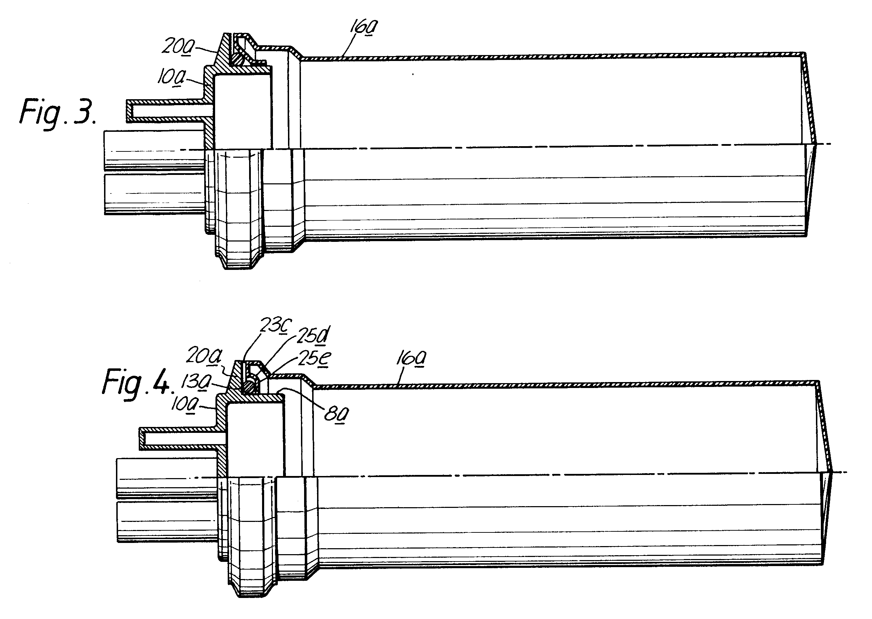

Referring to Figures 1 and 2, there is shown a joint closure comprising two end members 10, 12, a central member 14 and two sleeves 16, 18. Each end member has one or more tubular projections 9 for receiving the cables to be joined: the projections may be sealed around these cables by being heat-shrinkable themselves or by the application of separate heat-shrinkable sleeves over them. Each end member further has a cylindrical peripheral surface 8 for receiving an "O" ring 13 and the end of a sleeve 16 or 18, and this surface 8 is formed with a groove 7 which receives a split ring 20. The central member 14 is in the form of a ring having an annular flange projecting outwardly mid-way between its opposite sides: the ring receives the ends of the two sleeves 16, 18 with "O" rings 15 interposed.

Each sleeve 16 or 18 is formed of plastics material by rotational moulding (e.g. polyethylene or polypropylene). Each has an intermediate length 21, then end sections 22 of enlarged diameter, and final end sections 23 arranged to seat and seal onto the end members 10, 12 and central member 14 respectively. The sleeve is of substantially uniform wall thickness throughout its length, including the final end sections. In particular, each final end section comprises an enlarged diameter ring 23b joined to the section 22 by a transition 23a, then an inturned end formed of a radial flange 23c followed by an inclined portion 23d and finally a cylindrical portion 23e.

The cylindrical portions 23e at the ends of the sleeves 16, 18 seat on the cylindrical surfaces 8 of the end members 10, 12 and on the corresponding surfaces of the central member 14 as shown in Figure 1. The inclined portions 23d of the sleeve ends bear on the "O" rings 13, 15 to compress "O" rings 13 into the corners between the surfaces 8 of the end members and the split ring 20, and the "O" rings 15 into the corners between the ring and flange portions of the central member 14. The inclined arrangement of portions 23d allows some movement and tolerances to be accommodated, as the entire inturned end exhibits a degree of flexibility. The sleeve ends are locked in position by circular clamps 24, 26 of "V" section: each of these clamps is split into two parts, hinged together so that they can be opened and then applied around the joint closure. The clamps 24 engage around the split ring 20 and sleeve end sections 23, and clamp 26 engages around the radial flange of the central member 14 and the two adjacent sleeve end sections. Each clamp includes a screw-fitting for tightening the two clamp parts together opposite their hinge.

As shown in Figure 2, if the joint is to be reopenend, the clamps 24, 26 can be removed, then the split rings 20 and "O" rings 13. Then the sleeves 16, 18 can be slid away as indicated to give access to the joined cables within the closure. The intermediate length 21 of each sleeve is accordingly slightly greater in diameter than the end members 10, 12.

Where the joint closure is to be pressurised, this internal pressure acts on the inturned ends of the sleeves to urge these against the "O" rings and thus enhance the seal.

Figure 3 shows a single entry joint closure, i.e. it comprises a single end member 10a and a sleeve 16a which is closed at one end. This closure is shown with the end member 10a formed integrally with its ring 20a, but instead a split-ring-and-groove arrangement may be provided as in Figures 1 and 2.

Figure 4 shows another single entry joint closure, differing from the closure of Figure 3 as regards the form of the inturned end of the sleeve 16a. As compared with the inturned end described in detail with reference to Figures 1 and 2, the radial flange 23c of the inturned end is followed by an annular portion 25d which curves inwardly, in a concave sense as viewed from outside the end of the sleeve, to merge into a radial flange 25e which completes the inturned end of the sleeve. Thus this flange 25e is spaced inwardly, along the sleeve length, from the flange 23c (which defines the extreme end of the sleeve) and has its inner periphery seating on the outer cylindrical surface 8a of the end member 10a. The offsetting of the flange 25e from the flange 23c provides an annular space for receiving the "O" ring 13. The modified form of inturned end to the sleeve which is shown in Figure 4 is equally applicable to the sleeves 16, 18 in Figure 1 and 2.

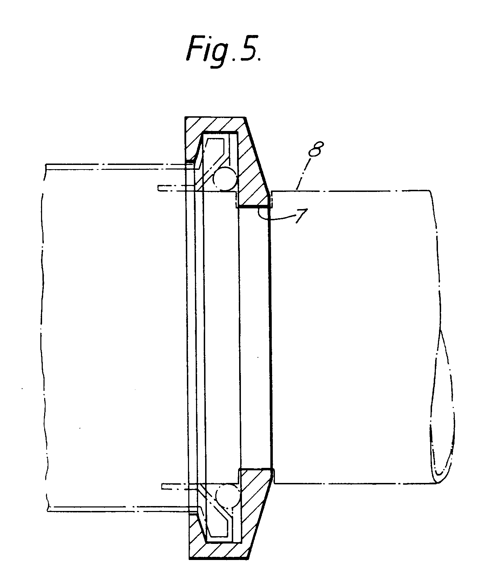

In each of the joint closures of Figures 1 and 2, Figure 3 or Figure 4, the split ring and clamp may be combined together, as shown in Figure 5. Thus, in effect, there is provided a split clamp as previously, being of generally "V" section but with one side extended and arranged to fit into the groove of the end member surface 8.

In all arrangements, thrust washers may be provided in addition to "O" rings 13, 15.

The two clamp parts may be separate parts (i.e. not hinged together), and bolted to each other at their two opposite junction points.

## Claims

1. A joint closure comprising an end member (10), a sleeve (16) having an end portion (23) which seats on a peripheral surface (8) of the end member (10) and against a radially projecting element (20) of the end member with the interposition of a ring seal (13) **characterised in that** the end portion (23) of the sleeve (16) is flexible and is inturned to seat on said peripheral surface (8) of the end member (10) and to seat by an outer face thereof against said radial element (20) with the interposition of said ring seal (13).

2. A joint closure as claimed in Claim 1, **characterised in that** the inturned end portion (23) of the sleeve (16) comprises an inwardly tapering section (23d) arranged to bear on the ring seal (13) and urge it against both the peripheral surface (8) of the end member and the radially projecting element (20) of the end member (10).

3. A joint closure as claimed in Claim 2, **characterised in that** the inturned end portion (23) of the sleeve (16) is completed by a cylindrical section (23e) which seats on the peripheral surface (8) of the end member (10).

4. A joint closure as claimed in Claim 3, **characterised in that** the inturned end of the sleeve (16a) comprises an annular radial flange (25e) offset inwardly along the sleeve length from its extreme end, for bearing against the ring seal (13a).

5. A joint closure as claimed in Claim 4, **characterised in that** said annular radial flange (25e) has a free inner peripheral edge which seats on the peripheral surface (8a) of the end member (10a).

6. A joint closure as claimed in any one of Claims 1 to 5, **characterised in that** the sleeve has opposite open ends both having inturned portions as aforesaid, and two end members as aforesaid are provided for receiving the inturned sleeve end portions.

7. A joint closure as claimed in Claim 6, **characterised in that** two said sleeves (16, 18) and a central member (14) are provided, each sleeve seating at one end of its ends on a said end member and at its other end on said central member.

8. A joint closure as claimed in any one of Claims 1 to 7, **characterised in that** said radially projecting element (20) of the or each end member comprises a split ring removably engageable into a groove (7) formed around said peripheral surface (8) of that end member.

9. A joint closure as claimed in any preceding claim, **characterised in that** a clamp (24) is provided for locking the inturned end portion (23) of each sleeve to said radially projecting element (20) of the end member (10).

10. A joint closure as claimed in claim 7, characterized in that the two sleeves are slidable over their respective end members and away from the central member (14) to re-open the joint.

## Patentansprüche

1. Verbindungsverschluß, der ein Endglied (10), eine Hülse (16) mit einem Endbereich (23), der auf der Umfangsoberfläche (8) des Endgliedes (10) und gegen ein radial vorstehendes Element (20) des Endgliedes anliegt, wobei dazwischen eine Ringdichtung (13) vorgesehen ist, **dadurch gekennzeichnet, daß** der Endbereich (23) der Hülse (16) flexibel und nach innen gedreht ist, um auf der Umfangsoberfläche (8) des Endgliedes (10) aufzusitzen und mit einer äußeren Fläche gegen das radiale Element (20) anzuliegen, wobei dazwischen eine Ringdichtung (13) vorgesehen ist.

2. Verbindungsverschluß nach Anspruch 1, **dadurch gekennzeichnet, daß** der nach innen gedreht Endbereich (23) der Hülse (16) einen sich nach innen verjüngenden Abschnitt (23d) aufweist, der so ausgebildet ist, daß er gegen die Ringdichtung (13) drückt und sie sowohl gegen die Umfangsoberfläche (8) des Endgliedes als auch gegen das radial vorstehende Element (20) des Endgliedes (10) drückt.

3. Verbindungsverschluß nach Anspruch 2, **dadurch gekennzeichnet, daß** der nach innen gedrehte Endbereich (23) der Hülse (16) von einem zylindrischen Abschnitt (23e) vervollständigt wird, der auf der Umfangsoberfläche (8) des Endgliedes (10) aufsitzt.

4. Verbindungsverschluß nach Anspruch 3, **dadurch gekennzeichnet, daß** das nach innen gedrehte Ende der Hülse (16a) einen ringförmigen Radialflansch (25e) aufweist, der entlang der Längenausdehnung der Hülse von seinem äußersten Ende nach innen versetzt ist, um gegen die Ringdichtung (13a) anzuliegen.

5. Verbindungsverschluß nach Anspruch 4, **dadurch gekennzeichnet, daß** der ringförmige Radialflansch (25e) einen freien inneren Umfangsrand aufweist, der auf der Umfangsoberfläche (8a) des Endgliedes (10a) aufsitzt.

6. Verbindungsverschluß nach einem der Ansprüche 1 bis 5, **dadurch gekennzeichnet, daß** die Hülse gegenüberliegende offene Enden aufweist, die beide wie erwähnt nach innen gedrehte Bereiche aufweisen, und daß zwei erwähnte Endglieder vorgesehen sind, um die nach innen gedrehten Hülsenendbereiche aufzunehmen.

7. Verbindungsverschluß nach Anspruch 6, **dadurch gekennzeichnet, daß** die Hülsen (16, 18) und ein mittiges Glied (14) vorgesehen sind, wobei jede Hülse an einem ihrer Enden auf dem Endglied und an ihrem anderen Ende auf dem mittigen Glied sitzt.

8. Verbindungsverschluß nach einem der Ansprüche 1 bis 7, **dadurch gekennzeichnet, daß** das radial vorstehende Element (20) des Endgliedes oder jedes Endgliedes einen Spaltring aufweist, der entfernbar in eine Nut (7) in Eingriff bringbar ist, die um die Umfangsoberfläche (8) des Endgliedes herum ausgebildet ist.

9. Verbindungsverschluß nach einem vorangehenden Anspruch, **dadurch gekennzeichnet, daß** eine Klammer (24) zum Verriegeln der nach innen gedrehten Endbereiche (23) jeder Hülse an dem radial vorstehenden Element (20) des Endgliedes (10) vorgesehen ist.

10. Verbindungsverschluß nach Anspruch 7, **dadurch gekennzeichnet, daß** die zwei Hülsen über ihre entsprechenden Endglieder schiebbar und vom mittigen Glied (14) wegschiebbar sind, um die Verbindung wieder zu öffnen.

## Revendications

1. Fermeture de joint comprenant un élément d'extrémité (10), un manchon (16) présentant une extrémité (23) qui repose sur une surface périphérique (8) de l'élément d'extrémité (10) et contre un élément (20) faisant saillie radialement de l'élément d'extrémité en présence d'un joint (13) caractérisée en ce que l'extrémité (23) du manchon (16) est flexible et retournée pour reposer sur ladite surface périphérique (8) dudit élément d'extrémité (10) et pour reposer par une face externe contre ledit élément radial (20) en présence dudit joint (13).

2. Fermeture de joint selon la revendication 1, caractérisée en ce que la partie d'extrémité retournée (23) du manchon (16) comprend une section inclinée vers l'intérieur (23d) conçue pour porter sur le joint (13) et pour plaquer celui-ci à la fois contre la surface périphérique (8) de l'élément d'extrémité et sur l'élément s'étendant radialement (20) de l'élément d'extrémité (10).

3. Fermeture de joint selon la revendication 2, caractérisée en ce que la partie d'extrémité retournée (23) du manchon (16) est terminée par une section cylindrique (23e) qui repose sur la surface périphérique (8) de l'élément d'extrémité (10).

4. Fermeture de joint selon la revendication 3, caractérisée en ce que l'extrémité retournée du manchon (16a) comprend un rebord annulaire radial (25e) débordant à l'intérieur du manchon, pour porter contre le joint (13a).

5. Fermeture de joint selon la revendication 4, caractérisée en ce que ledit rebord radial annulaire (25e) présente un bord périphérique intérieur libre qui repose sur la surface périphérique (8a) de l'élément d'extrémité (10a).

6. Fermeture de joint selon l'une quelconque des revendications 1 à 5, caractérisée en ce que le manchon présente deux extrémités ouvertes opposées possédant toutes les deux des parties retournées et en ce que deux éléments d'extrémité sont prévus pour recevoir des parties retournées des extrémités du manchon.

7. Fermeture de joint selon la revendication 6, caractérisée en ce qu'elle est pourvue des deux manchons (16, 18) et d'un élément central (14), chaque manchon reposant à l'une des ses extrémités sur l'un desdits éléments d'extrémité et à son autre extrémité sur ledit élément central.

8. Fermeture de joint selon l'une quelconque des revendications 1 à 7, caractérisée en ce que l'élément faisant saillie radialement (20) de l'un ou de l'autre élément d'extrémité comprend un joint fendu pouvant coopérer de façon réversible avec un creux (7) formé autour de ladite surface périphérique de cet élément d'extrémité.

9. Fermeture de joint selon l'une quelconque des revendications précédentes caractérisée en ce qu'une fixation (24) est prévue pour bloquer la partie d'extrémité retournée (23) de chaque manchon sur ledit élément faisant saillie radialement (20) de l'élément d'extrémité (10).

10. Fermeture de joint selon la revendication (7) caractérisée en ce que les deux manchons peuvent glisser par rapport à leurs éléments d'extrémité respectifs et se séparer de l'élément central (14) pour réouvrir le joint.
